# EUROPÄISCHE PATENTSCHRIFT

(11) **EP 2 553 624 B1**
(45) Veröffentlichungstag und Bekanntmachung des Hinweises auf die Patenterteilung: **15.07.2015**
(21) Anmeldenummer: 11710437.2
(22) Anmeldetag: 25.03.2011
(51) Int. Cl.: G06K 7/00, G06K 19/07, H04B 5/00

(54) **SYSTEM UND VERFAHREN ZUR ANWESENHEITSERKENNUNG EINES ZWEITEN TRAGBAREN DATENTRÄGERS DURCH EINEN ERSTEN TRAGBAREN DATENTRÄGER**
SYSTEM AND METHOD FOR DETECTING THE PRESENCE OF A SECOND PORTABLE DATA STORAGE MEDIUM BY A FIRST PORTABLE DATA STORAGE MEDIUM
SYSTÈME ET PROCÉDÉ PERMETTANT À UN PREMIER SUPPORT DE DONNÉES PORTATIF DE DÉTECTER LA PRÉSENCE D'UN SECOND SUPPORT DE DONNÉES PORTATIF

(30) Priorität: 29.03.2010 DE 102010013203
(43) Veröffentlichungstag der Anmeldung: 06.02.2013
(73) Patentinhaber: Giesecke & Devrient GmbH, 81677 München (DE)
(72) Erfinder: FINKENZELLER, Klaus, 85774 Unterföhring (DE); MEISTER, Gisela, 81737 München (DE)
(86) Internationale Anmeldenummer: PCT/EP2011/001524
(87) Internationale Veröffentlichungsnummer: WO 2011/120662

(56) Entgegenhaltungen:
- DE-A1-102004 058 165
- DE-A1-102007 022 943
- DE-U1-202005 014 750

## Beschreibung

Die Erfindung betrifft Systeme zur Anwesenheitserkennung eines zweiten tragbaren Datenträgers durch einen ersten tragbaren Datenträger.

Beim Einsatz einer elektronischen Gesundheitskarte ist es in bestimmten Anwendungsfällen notwendig, die Anwesenheit eines Arztes festzustellen, bevor auf Daten der elektronischen Gesundheitskarte zugegriffen werden kann. Um die Anwesenheit eines Arztes feststellen und überprüfen zu können, muss zwischen der elektronischen Gesundheitskarte (einem tragbaren Datenträger) eines Patienten und einem sog. Heilsberufsausweis (ebenfalls in Gestalt eines tragbaren Datenträgers) des Arztes eine Authentisierung durchgeführt werden. Diese Authentisierung wird von einem Terminal, mit dem die elektronische Gesundheitskarte und der Heilberufsausweis in kommunikativer Verbindung stehen, als Host angestoßen. Anschließend erfolgt die Authentisierung über ein Sicherheitsmodul (SMC-A) des Terminals, bei der die im Rahmen der Authentisierung stattfindende Kommunikation zwischen elektronischer Gesundheitskarte und Heilsberufsausweis in dem Terminal getunnelt werden muss. Nach erfolgter Authentisierung kann der Heilsberufsausweis jedoch unbemerkt entfernt werden, wobei die Authentisierung gültig bleibt und somit weiterhin auf die elektronische Gesundheitskarte zugegriffen werden kann.

Es besteht deshalb ein Bedürfnis zur Anwesenheitserkennung zwischen zwei Datenträgern.

Befinden sich mehrere kontaktlose Datenträger, wie z.B. Chipkarten, im Ansprechbereich eines RFID-Lesegeräts, insbesondere nach ISO/IEC 14443 Typ A oder Typ B, so kann das Lesegerät (d.h. das Terminal) mit jedem der kontaktlosen Datenträger im Feld seiner Antenne (sog. Ansprechbereich) eine Kommunikationsbeziehung aufbauen. Eine direkte Kommunikation von Datenträger zu Datenträger ist jedoch nicht möglich, da die Datenträger typischerweise nicht über Mittel zum Detektieren der Lastmodulation eines anderen Datenträgers verfügen. Die mögliche Realisierung eines solchen Lastmodulations-Detektors auf einem tragbaren Datenträger wird durch die üblicherweise verwendeten Modulationsverfahren (ISO/IEC 14443: Lastmodulation mit einem Hilfsträger bei einer Frequenz von 848 kHz) zusätzlich erschwert. Eine Kommunikation von Datenträger zu Datenträger ist somit nach dem Stand der Technik nur unvorteilhaft unter Einbeziehung des Lesegeräts möglich.

Aus der DE 10 2007 022 943 A1 als nächstliegendem Stand der Technik ist ein System bestehend aus einem Lesegerät und mehreren Datenträgern bekannt. Das Lesegerät versorgt alle Datenträger mit Energie über ein Kontaktlosfeld. Um einem Datenträger eine konfliktfreie direkte Kommunikation mit einem zweiten Datenträger zu ermöglichen, wird das Lesegerät durch den ersten Datenträger in einen Wartemodus und der erste Datenträger in einen aktiven Kommunikationsmodus versetzt.

Aus der DE 10 2004 058 165 ist ein kontaktloser Datenträger bekannt, welcher zusätzlich zu einer kontaktlosen Daten-Schnittstelle, beispielsweise auf Basis von Infrarot- oder Funkübertragung, über eine Empfangseinrichtung zum Empfangen von Energie verfügt, welche separat von den Daten kontaktlos übertragen wird. Diese Ausgestaltung bezweckt, dass auch ein tragbarer Datenträger, der über keine oder keine ausreichende eigene Energiequelle verfügt, eine kontaktlose Datenübertragung durchführen kann, für die ver gleichsweise viel Energie benötigt wird. Insbesondere sollen dem tragbaren Datenträger Übertragungstechniken für die kontaktlose Datenübertragung erschlossen werden, die sich für eine kontaktlose Energieübertragung ansonsten weniger gut eignen.

Es ist Aufgabe der vorliegenden Erfindung, Systeme anzugeben, welche eine einfache Anwesenheitserkennung zwischen zwei tragbaren Datenträgern ermöglichen.

Diese Aufgabe wird gelöst durch ein erstes System zur Anwesenheitserkennung gemäß den Merkmalen des Patentanspruchs 1 sowie durch ein zweites System zur Anwesenheitserkennung gemäß den Merkmalen des Patentanspruchs 5 als auch durch das Verfahren gemäß Anspruch 13 gelöst. Vorteilhafte Ausgestaltungen ergeben sich aus den abhängigen Patentansprüchen.

Die Erfindung schafft ein erstes System zur Anwesenheitserkennung eines zweiten tragbaren Datenträgers durch einen ersten tragbaren Datenträger, welche jeweils eine kontaktlose Schnittstelle mit einer Antenne und eine elektronische Schaltung zum Speichern und/oder Verarbeiten von Daten umfassen. Das System umfasst gemäß dieser ersten Ausgestaltungsvariante ferner ein RFID-Lesegerät, um dessen Antenne im Betrieb ein Feld ausgebildet ist, innerhalb dem das Lesegerät anwesende kontaktlose Datenträger über ihre jeweiligen Antennen mit Energie versorgt und/ oder über das eine Kommunikationsverbindung aufgebaut werden kann. In dem ersten und dem zweiten Datenträger ist jeweils ein weiteres Kommunikationsmittel vorgesehen, über das ein zusätzlicher, vom Feld des Lesegeräts unabhängiger und direkter Kommunikationskanal zwischen dem ersten und dem zweiten Datenträger bereitstellbar ist, um die unmittelbare Anwesenheit des zweiten Datenträgers im Feld des Lesegeräts durch den ersten Datenträger überprüfen zu können.

Das erfindungsgemäße erste System ermöglicht eine direkte Kommunikation zwischen dem ersten und dem zweiten Datenträger unter Umgehung des RFID-Lesegeräts. Dabei kann zuverlässig die Anwesenheit des zweiten tragbaren Datenträgers durch den ersten tragbaren Datenträger festgestellt werden, indem der direkte Kommunikationskanal zwischen den beiden Datenträgern verwendet wird. Insbesondere lässt sich das erfindungsgemäße System zur Anwesenheitserkennung auf einfache und kostengünstige Weise realisieren, da die hierzu eingesetzten tragbaren Datenträger lediglich insoweit abgeändert werden müssen, als diese mit einem weiteren Kommunikationsmittel zur Bereitstellung des direkten Kommunikationskanals versehen werden müssen.

In einer zweckmäßigen Ausgestaltung des ersten Systems zur Anwesenheitserkennung umfasst das weitere Kommunikationsmittel des ersten und zweiten Datenträgers einen optischen Transceiver, welcher insbesondere zum Senden und Empfangen von Daten im Infrarotbereich ausgebildet ist Alternativ ist das weitere Kommunikationsmittel des ersten und zweiten Datenträgers zum Senden und Empfangen von elektromagnetischen Signalen auf einer Frequenz ausgebildet, welche unterschiedlich von der Frequenz des Lesegeräts ist Insbesondere eignen sich für den direkten Kommunikationskanal zwischen den weiteren Kommunikationsmitteln des ersten und zweiten Datenträgers Frequenzen im UHF-Frequenzbereich, z.B. 865 MHz oder 2,45 GHz. Dafür notwendige Antennen lassen sich auf einfache Weise realisieren.

Gemäß einer weiteren Konkretisierung des erfindungsgemäßen Systems zur Anwesenheitserkennung der ersten Alternative basiert das Lesegerät auf dem Standard ISO/IEC 14443 und arbeitet bevorzugt in einem Frequenzbereich von 13,56 MHz.

Es ist weiterhin zweckmäßig, wenn der erste Datenträger in einer Kommunikationsbeziehung zu dem Lesegerät steht und der zweite Datenträger zumindest Energie aus dem Feld des Lesegeräts bezieht Eine Kommunikationsbeziehung des zweiten Datenträgers zu dem Lesegerät ist hingegen nicht notwendig. Die Kommunikationsbeziehung zwischen dem Lesegerät und dem ersten Datenträger betrifft beispielsweise die Ausführung einer bestimmten, vorgegebenen Aktion (z.B. Lesen von in dem ersten Datenträger gespeicherten Daten) oder eines bestimmten Kommandos, wobei die physikalische Anwesenheit des zweiten Datenträgers zur Ausführung der Aktion oder des Kommandos benötigt wird.

Um erkennen zu können, ob nach einem erstmaligen Aufbau des direkten Kommunikationskanals zwischen den weiteren Kommunikationsmitteln des ersten und zweiten Datenträgers dieser weiterhin besteht oder (bewusst oder unbewusst) abgebrochen wurde, ist es zweckmäßig, wenn eine mehrfache, insbesondere eine periodische, Kommunikation zwischen dem ersten Datenträger und dem zweiten Datenträger über den direkten Kommunikationskanal vorgesehen ist

Die Erfindung schafft daneben ein zweites System zur Anwesenheitserkennung eines zweiten tragbaren Datenträgers durch einen ersten tragbaren Datenträger, welche jeweils eine kontaktbehaftete Schnittstelle und eine elektronische Schaltung zum Speichern und/ oder Verarbeiten von Daten umfassen. Der erste Datenträger umfasst zusätzlich eine, parallel zu der kontakt behafteten Schnittstelle betreibbare, kontaktlose Schnittstelle. Der zweite Datenträger umfasst zusätzlich eine NFC-Schnittstelle. Das System umfasst ferner ein Lesegerät mit zwei kontaktbehafteten Schnittstellen, über welche die Datenträger mit Energie versorgbar sind und aufgrund der räumlichen Anordnung über die NFC-Schnittstelle des zweiten Datenträgers eine drahtlose, direkte Kommunikationsverbindung zu der kontaktlosen Schnittstelle des ersten Datenträgers herstellbar ist, um die unmittelbare Anwesenheit des zweiten Datenträgers durch den ersten Datenträger überprüfen zu können.

Bei NFC (Near Field Communication) handelt es sich um ein Übertragungsverfahren mittels magnetischer Felder im Frequenzbereich von 13,56 MHz. Die typische Reichweite von NFC-Geräten beträgt etwa 20 cm. Die eingesetzten Verfahren zur Datenübertragung sind denen kontaktloser Datenträger sehr ähnlich. NFC-Geräte sind daher auch in der Lage, mit kontaktlosen Datenträgern zu kommunizieren oder einen kontaktlosen Datenträger zu simulieren, indem eine Lastmodulation erzeugt wird. NFC ist in der Norm ISO/IEC 18092 spezifiziert. Der zweite Datenträger, welcher zusätzlich zu seiner kontaktbehafteten Schnittstelle eine NFC-Schnittstelle aufweist, ist zur Realisierung des zweiten Systems in den Betriebsarten "Card Emulation", "Reader Emulation" und "Peer to Peer" (P2P) betreibbar.

Auch bei diesem zweiten, alternativen System zur Anwesenheitserkennung eines zweiten Datenträgers durch einen ersten Datenträger wird ein direkter Kommunikationskanal zwischen den beiden Datenträgern benutzt Die Energieversorgung der beiden Datenträger erfolgt bei dieser zweiten Variante über die kontaktbehafteten Schnittstellen der Datenträger. Eine Einbeziehung des Lesegeräts in die Kommunikation zur Feststellung der Anwesenheitserkennung ist auch bei dieser Variante nicht notwendig. Die zweite Variante des erfindungsgemäßen Systems zur Anwesenheitserkennung weist darüber hinaus den Vorteil auf, dass herkömmliche, bekannte Lesegeräte und Datenträger eingesetzt werden können.

Gemäß einer zweckmäßigen Ausgestaltung der zweiten Variante des erfindungsgemäßen Systems zur Anwesenheitserkennung sind die Schnittstellen des Lesegeräts räumlich derart zueinander angeordnet, dass die Hauptflächen der Datenträger parallel zueinander in geringem Abstand angeordnet sind. Hierdurch ist sichergestellt, dass der für eine NFC-Kommunikation erforderliche Abstand von maximal 20 cm nicht überschritten wird und ein guter Empfang bei der drahtlosen Kommunikation über den direkten Kommunikationskanal gegeben ist.

Zweckmäßigerweise basiert der zweite Datenträger auf dem Standard ISO/IEC 18092, wodurch der zweite Datenträger RFID-Reader-Funktionalität aufweist

Gemäß einer weiteren zweckmäßigen Ausgestaltung der zweiten Variante des erfindungsgemäßen Systems sind der erste und der zweite Datenträger dauerhaft durch das Lesegerät mit Energie versorgt Die Versorgung erfolgt dabei über die jeweiligen kontaktbehafteten Schnittstellen des ersten und zweiten Datenträgers.

In einer weiteren Ausgestaltung der zweiten Variante des erfindungsgemäßen Systems ist ein RFID-Lesesignal zumindest einmalig, insbesondere mehrfach, bevorzugt periodisch, oder alternativ dauerhaft erzeugbar zur Herstellung der Kommunikationsverbindung mit dem ersten Datenträger. Hierdurch kann eine Anwesenheitskontrolle durchgeführt werden, mit der die Anwesenheit der jeweils anderen Karte sicher festgestellt werden kann. Die mehrfache oder dauerhafte Erzeugung des RFID-Lesesignals stellt sicher, dass die räumliche Entfernung des zweiten Datenträgers durch den ersten Datenträger erkannt wird.

Eine das erste und zweite erfindungsgemäße System betreffende Ausgestaltungsvariante sieht vor, dass dem ersten Datenträger die Durchführung vorgegebener Kommandos und/oder Aktionen und/oder das Lesen und/oder Beschreiben bestimmter Speicherbereiche nur dann ermöglicht ist, wenn die Anwesenheit des zweiten Datenträgers durch den ersten Datenträger positiv überprüft werden konnte. Hierdurch wird sichergestellt, dass die bestimmungsgemäße Funktion des ersten Datenträgers nur dann ausgeführt werden kann, wenn die Anwesenheit des zweiten Datenträgers gegeben ist Beispielsweise ist das Lesen von Daten aus einem Speicher des ersten Datenträgers und/ oder das Schreiben von Daten in den Speicher des ersten Datenträgers nur bei Anwesenheit des zweiten Datenträgers möglich.

In einer weiteren, beide Varianten betreffenden Ausgestaltung ist eine direkte Authentisierung zwischen dem ersten und dem zweiten Datenträger unter Umgehung des Lesegeräts vorgesehen. Insbesondere kann die Authentisierung widerrufbar sein, wenn die Anwesenheit des zweiten Datenträgers durch den ersten Datenträger nicht positiv überprüft werden konnte.

Die Erfindung wird nachfolgend näher anhand von Ausführungsbeispielen erläutert Es zeigen:
- Fig.1: eine schematische Darstellung eines ersten erfindungsgemäßen Systems zur Anwesenheitserkennung eines zweiten tragbaren Datenträgers durch einen ersten tragbaren Datenträger, und
- Fig. 2: eine schematische Darstellung eines zweiten erfindungsgemäßen Systems zur Anwesenheitserkennung eines zweiten tragbaren Datenträgers durch einen ersten tragbaren Datenträger.

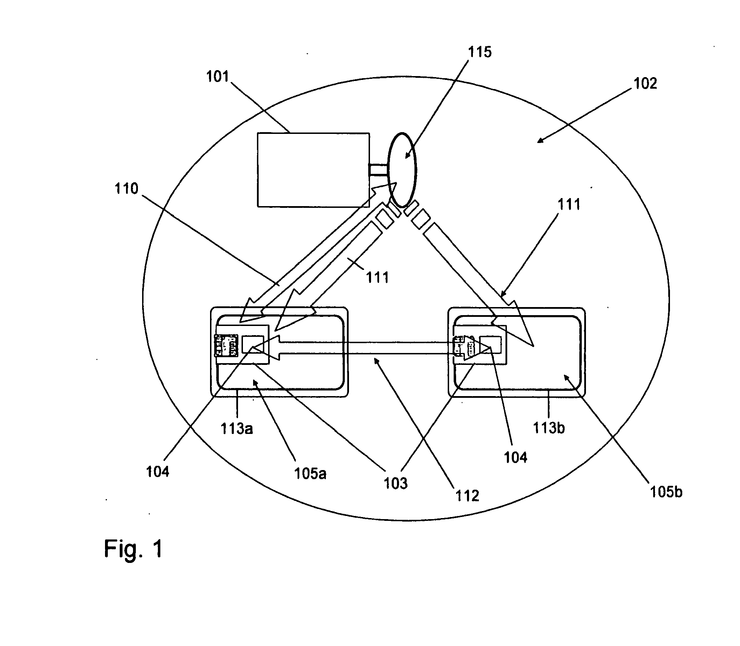

Fig.1 zeigt in einer schematischen Darstellung den Aufbau des erfindungsgemäßen Systems zur Anwesenheitserkennung eines zweiten tragbaren Datenträgers 105b durch einen ersten tragbaren Datenträger 105a in einer ersten Variante. Das System umfasst ein RFID-Lesegerät 101 (sog. Terminal) sowie die wenigstens zwei als kontaktlose Chipkarten ausgebildeten tragbaren Datenträger 105a, 105b.

Das RFID-Lesegerät 101 arbeitet bevorzugt im Frequenzbereich 13,56 MHz, besonders bevorzugt nach dem Standard ISO/IEC 14443. Das RFID-Lesegerät 101 weist eine Antenne 115 auf. Um die Antenne 115 bildet sich ein Feld 102 aus (auch als Ansprechbereich bezeichnet), innerhalb dem das Lesegerät 101 anwesende kontaktlose Chipkarten 105a, 105b mit Energie (Bezugszeichen 111) versorgt und/oder eine Kommunikationsbeziehung 110 aufbauen kann.

Die kontaktlosen Chipkarten 105a, 105b verfügen jeweils über eine Antenne 113a, 113b zum Empfang von Energie aus dem Feld 102 des RFID-Lesegeräts 101. Darüber hinaus weisen diese eine Schaltung 103 zum Speichern und/oder Verarbeiten von Daten auf, welche als Chip ausgebildet ist. Der Chip 103 steuert unter anderem die Kommunikation der jeweiligen Chipkarte mit dem RFID-Lesegerät 101 sowie der Chipkarten 105a, 105b untereinander. Eine mit dem RFID-Lesegerät stattfindende Kommunikation erfolgt drahtlos durch das Feld 102.

Ferner verfügen die kontaktlosen Chipkarten 105a, 105b bzw. deren Chip 103 über ein zusätzliches Kommunikationsmittel 104. Das weitere Kommunikationsmittel 104 stellt einen zusätzlichen, vom Feld 102 des RFID-Lesegeräts 101 unabhängigen Daten-Kommunikationskanal 112 zur Verfügung. Der Kommunikationskanal wird daher als direkter Kommunikationskanal 112 zwischen den Chipkarten 105a, 105b bezeichnet Das weitere Kommunikationsmittel 104 besteht beispielsweise aus einer optischen Sende-/Empfangseinheit (als Transceiver bezeichnet), welche besonders bevorzugt im Infrarotbereich arbeitet Das weitere Kommunikationsmittel 104 kann jedoch auch auf einer Frequenz betrieben werden, welche unterschiedlich zu der Frequenz des RFID-Geräts 101 ist Hierzu eignen sich insbesondere Frequenzen im UHF-Frequenzbereich, z.B. 856 MHz oder 2, 45 GHz, da hierbei die benötigten Antennen leicht zu realisieren sind.

Die Funktionsweise des in Fig. 1 dargestellten Systems zur Anwesenheitserkennung ist wie folgt

Gelangt eine Chipkarte 105a,105b in das Feld 2 des RFID-Lesegeräts 1, so wird die betreffende Chipkarte mit Energie versorgt und kann eine Kommunikationsbeziehung 110 zu dem RFID-Lesegerät 101 aufbauen.

Erfindungsgemäß ist vorgesehen, dass die Chipkarte 105a im Feld bzw. Ansprechbereich 102 des RFID-Lesegeräts 101 eine Kommunikationsbeziehung 110 zu dem RFID-Lesegerät 101 aufgebaut hat und zur Ausführung einer bestimmten Aktion oder eines bestimmten Kommandos die physikalische Anwesenheit der zweiten Chipkarte 105b überprüfen möchte oder muss. Die Chipkarte 105b benötigt dabei keine unmittelbare Kommunikationsbeziehung zu dem RFID-Lesegerät 101, erhält jedoch mindestens Energie 111 aus dem Ansprechfeld 102 des RFID-Lesegeräts 101. Es ist weiterhin vorgesehen, dass die Chipkarte 105a mit Hilfe ihres beispielsweise optischen Kommunikationsmittels 104 eine direkte Kommunikationsbeziehung 112 zu der Chipkarte 105b aufbaut, um deren unmittelbare Anwesenheit im Feld 102 bzw. Ansprechbereich des RFID-Lesegeräts 101 überprüfen zu können.

Dabei kann vorgesehen sein, dass die Chipkarte 105a bestimmte Kommandos und/oder Aktionen nur dann ausführt und/oder bestimmte Speicherbereiche nur dann lesen und/oder beschreiben kann, wenn die Anwesenheit der zweiten Chipkarte 105b im Kommunikationsbereich des direkten Kommunikationskanals 112, z.B. durch eine Authentisierung, nachgewiesen werden konnte.

Das Vorsehen eines jeweiligen weiteren Kommunikationsmittels 104 in den Chipkarten 105a, 105b ermöglicht beispielsweise eine direkte Authentisierung zwischen den Chipkarten 105a und 105b unter Umgehung des RFID-Terminals 101 und dessen Sicherheitsmoduls (SMC-A). Durch ein periodisches Polling kann dabei sichergestellt werden, dass die Chipkarte 105b den Bereich des Felds 102 des RFID-Lesegeräts 101 nicht verlassen hat. Falls die Anwesenheit der Chipkarte 105b durch die Chipkarte 105a nicht mehr festgestellt werden kann, können die Authentisierung und damit die Zugriffsberechtigung des RFID-Lesegeräts 101 auf bestimmte, vorgegebene Daten in der Chipkarte 105a gesperrt werden.

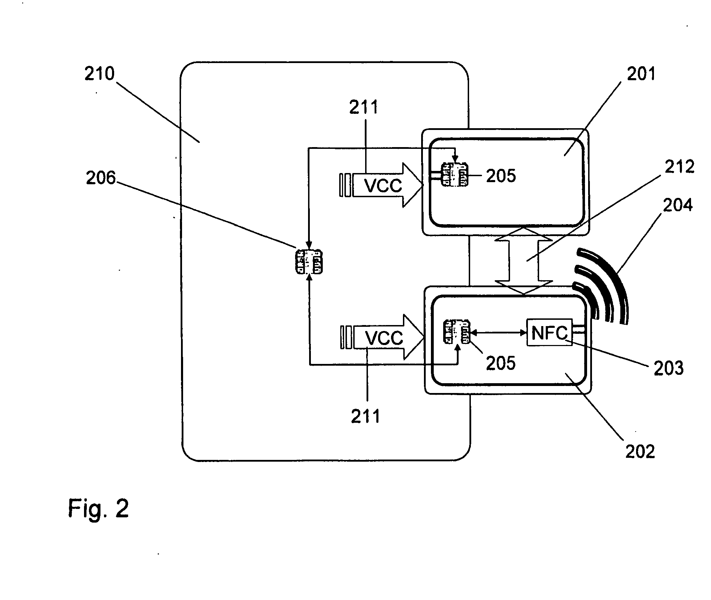

Fig. 2 zeigt eine schematische Darstellung eines erfindungsgemäßen Systems zur Anwesenheitserkennung gemäß einer zweiten Variante. Das erfindungsgemäße System dieser Variante besteht aus einem Lesegerät 210 mit wenigstens zwei kontaktbehafteten Schnittstellen (nicht dargestellt). Das System umfasst weiterhin wenigstens einen NFC-fähigen Datenträger 202 in Gestalt einer Chipkarte sowie wenigstens einen als Dual-Interface-Chipkarte 201 ausgebildeten Datenträger, ebenfalls in Gestalt einer Chipkarte. Die kontaktbehafteten Schnittstellen des Lesegeräts 210 sind dabei derart räumlich angeordnet, dass die Hauptflächen der Chipkarten 201 und 202 parallel zueinander in geringem Abstand angeordnet sind. Hierdurch wird eine kontaktlose Kommunikation zwischen den beiden Chipkarten 201 und 202 ermöglicht

Bei der Chipkarte 201 handelt es sich um eine Dual-Interface-Chipkarte nach dem bekannten Stand der Technik. Das Betriebssystem (OS) der Chipkarte 201 ist dabei so ausgelegt, dass das kontaktlose Interface gemäß ISO/IEC 14443 und das kontaktbehaftete Interface gemäß ISO/IEC 7816 parallel bedient werden können.

Bei der Chipkarte 202 handelt es sich um eine Chipkarte mit einer NFC-Schnittstelle, welche bevorzugt nach ISO/IEC 18092 ausgebildet ist, wodurch die Chipkarte auch eine RFID-Reader-Funktionalität erlangt, die als NFC-Mode "Being Reader" bezeichnet wird.

Jede der Chipkarten 201, 202 umfasst eine elektronische Schaltung zum Speichern und/oder Verarbeiten von Daten in Gestalt eines Chips 205.

Die Energie- bzw. Spannungsversorgung erfolgt über die kontaktbehafteten Schnittstellen der genannten Komponenten. Dies ist in der Figur schematisch mit dem Bezugszeichen 211 gekennzeichnet Über die kontaktbehaftete Schnittstelle ist jede der Chipkarten 201, 202 ferner in der Lage, mit dem Lesegerät 210 zu kommunizieren.

Die Funktionsweise des in Fig. 2 dargestellten Systems ist wie folgt

Zum erfindungsgemäßen Betrieb des Systems werden die Chipkarte 202 mit der NFC-Schnittstelle 203 sowie die Dual-Interface-Chipkarte 201 in die kontaktbehafteten Schnittstellen des Lesegeräts 210 eingesteckt, welches über ein Sicherheitsmodul 206 verfügt Über das Lesegerät 210 werden die Chipkarten 201 und 202 (möglichst dauerhaft) mit einer Betriebsspannung Vcc versorgt. Wie beschrieben, kann das Lesegerät 210 mit den beiden Chipkarten 201 und 202 auf kontaktbehaftetem Wege kommunizieren.

Zur Durchführung einer Anwesenheitskontrolle zwischen den Chipkarten 201 und 202 ist vorgesehen, dass die Chipkarte 202 mit der NFC-Schnittstelle 203 wenigstens einmal, bevorzugt periodisch, oder alternativ dauerhaft ein RFID-Lesesignal 204 erzeugt. Hierdurch ist der Aufbau einer Kommunikationsverbindung 212 zwischen der Chipkarte 202 und der Chipkarte 201 möglich. Denkbar ist auch, dass sich mehrere Dual-Interface-Chipkarten in der Nähe der Chipkarte 202 mit der NFC-Schnittsstelle 203 befinden und zu jeder dieser Chipkarten eine Kommunikationsbeziehung aufgebaut wird.

Es erfolgt zwischen den Chipkarten 201 und 202 ein Datenaustausch über den direkten Kommunikationskanal 212, der bevorzugt mit einer Authentisierung beginnt Durch periodische Wiederholung des Datenaustausches über den direkten Kommunikationskanal 212 können die Chipkarten 201 und 202 die Anwesenheit der jeweils anderen Chipkarte sicher feststellen.

Eine einfache Möglichkeit besteht darin, dass die Chipkarte 202 regelmäßig ein Kommando an die Chipkarte 201 sendet Die Chipkarte 201 kann dabei mit einem Timer ausgestattet sein, welcher eine Zeit vorgibt, innerhalb der die Chipkarte 201 (Dual-Interface-Chipkarte) erneut ein Kommando absetzen muss, um die Gültigkeit der Anwesenheit aufrecht zu erhalten. Hierbei kann zwischen den Kommandos auch das RFID-Leser-Feld 204 abgeschaltet werden, da die Chipkarte 201 über ihre kontaktbehaftete Schnittstelle zu dem Lesegerät 210 weiterhin mit Betriebsspannung Vcc versorgt wird.

Eine alternative Möglichkeit besteht darin, dass die Chipkarte 202 mit der NFC-Schnittstelle 203 ein Kommando an die Karte 201 sendet, welches dieses jedoch nicht beantwortet Stattdessen wird in regelmäßigen Abständen ein WTX-Request (Waiting Time Extension) an die Chipkarte 202 mit der NFC-Schnittstelle 203 gesendet, welcher durch diese durch einen WTX-Response beantwortet wird. In diesem Falle muss das RFID-Leser-Feld 204 während der ganzen Zeit erzeugt werden.

Ist das RFID-Leser-Feld 204 permanent eingeschaltet und wird die Chipkarte 202 mit der NFC-Schnittstelle dem Lesegerät 210 entnommen, so wird auch das RFID-Leser-Feld 204 unterbrochen. Diese Zusatzänderung kann unmittelbar von der Chipkarte 201 erfasst werden, so dass die Anwesenheit der Chipkarte 202 ohne Zeitverzögerung erkannt wird.

Ein mögliches Anwendungsbeispiel der in den Figuren 1 und 2 dargestellten Systeme ist der Einsatz bei der elektronischen Gesundheitskarte. Bei dieser gibt es Anwendungsfälle, bei denen es notwendig ist, die Anwesenheit eines Arztes festzustellen, bevor auf Daten der elektronischen Gesundheitskarte zugegriffen werden kann. Hierzu muss zwischen der elektronischen Gesundheitskarte und dem Heilberufsausweis des Arztes eine Authentisierung durchgeführt werden.

Im Falle der in Fig.1 beschriebenen Ausführungsvariante ist vorgesehen, die elektronische Gesundheitskarte und den Heilsberufsausweis jeweils mit einer kontaktlosen Schnittstelle auszustatten sowie das weitere Kommunikationsmittel vorzusehen, wodurch eine direkte Authentisierung zwischen elektronischer Gesundheitskarte und Heilsberufsausweis unter Umgehung des RFID-Lesegeräts ermöglicht wird.

Bei der in Fig. 2 dargestellten Ausführungsvariante ist vorgesehen, die elektronische Gesundheitskarte bevorzugt als Dual-Interface-Chipkarte und den Heilberufsausweis bevorzugt als NFC-Chipkarte auszustatten. Dies ermöglicht ebenfalls die direkte Authentisierung zwischen elektronischer Gesundheitskarte und dem Heilberufsausweis unter Umgehung des Lesegeräts und dessen Sicherheitsmodul SMC-A.

Durch ein periodisches Polling kann dabei sichergestellt werden, dass der Heilberufsausweis den Bereich des Lesegeräts nicht verlassen hat Falls die Anwesenheit des Heilberufsausweises durch die elektronische Gesundheitskarte nicht mehr festgestellt werden kann, kann die Authentisierung und damit die Zugriffsberechtigung des Lesegeräts auf bestimmte, festgelegte Daten in der elektronischen Gesundheitskarte wieder gesperrt werden.

## Patentansprüche

1. System zur Anwesenheitserkennung eines zweiten tragbaren Datenträgers (105b) durch einen ersten tragbaren Datenträger (105a), welche jeweils eine kontaktlose Schnittstelle mit einer Antenne und eine elektronische Schaltung (103) zum Speichern und/ oder Verarbeiten von Daten umfassen, wobei das System ferner ein RFID-Lesegerät (101) umfasst, um dessen Antenne (115) im Betrieb ein Feld (102) ausgebildet ist, innerhalb dem das Lesegerät (101) anwesende kontaktlose Datenträger (105a, 105b) über ihre jeweiligen Antennen mit Energie versorgt und/oder über das eine Kommunikationsverbindung aufgebaut werden kann, wobei in dem ersten und dem zweiten Datenträger (105a, 105b) jeweils ein weiteres Kommunikationsmittel (104) vorgesehen ist,
wobei über die weiteren Kommunikationsmittel (104) ein zusätzlicher, vom Feld (102) des Lesegeräts (101) unabhängiger und direkter Kommunikationskanal (112) zwischen dem ersten und dem zweiten Datenträger (105a, 105b) bereitstellbar ist, um die unmittelbare Anwesenheit des zweiten Datenträgers (105b) im Feld (102) des Lesegeräts (101) durch den ersten Datenträger (105a) überprüfen zu können,
**dadurch gekennzeichnet,**
**dass** das weitere Kommunikationsmittel (104) des ersten und zweiten Datenträgers zum Senden und Empfangen von elektromagnetischen Signalen auf einer Frequenz ausgebildet ist, welche unterschiedlich von der Frequenz des Lesegeräts (101) ist, oder
**dass** das weitere Kommunikationsmittel (104) des ersten und zweiten Datenträgers einen optischen Transceiver umfasst, welcher insbesondere zum Senden und Empfangen im Infrarotbereich ausgebildet ist.

2. System nach Anspruch 1, **dadurch gekennzeichnet, dass** das Lesegerät (101) auf dem Standard ISO/IEC 14443 basiert und bevorzugt in einem Frequenzbereich von 13,56 MHz arbeitet.

3. System nach Anspruch 1 oder 2, **dadurch gekennzeichnet, dass** der erste Datenträger (5a) in einer Kommunikationsbeziehung zu dem Lesegerät (101) steht und der zweite Datenträger (105b) zumindest Energie (111) aus dem Feld (102) des Lesegeräts (101) bezieht.

4. System nach einem der vorhergehenden Ansprüche, **dadurch gekennzeichnet, dass** eine mehrfache, insbesondere periodische, Kommunikation zwischen dem ersten Datenträger (105a) und dem zweiten Datenträger (105b) vorgesehen ist.

5. System zur Anwesenheitserkennung eines zweiten tragbaren Datenträgers (202) durch einen ersten tragbaren Datenträger (201), welche jeweils eine kontaktbehaftete Schnittstelle und eine elektronische Schaltung zum Speichern und/oder Verarbeiten von Daten umfassen und der erste Datenträger (201) zusätzlich eine, parallel zu der kontaktbehafteten Schnittstelle betreibbare, kontaktlose Schnittstelle und der zweite Datenträger (202) zusätzlich eine NFC-Schnittstelle aufweisen, wobei das System ferner ein Lesegerät (210) mit zwei kontaktbehafteten Schnittstellen umfasst, über welche die Datenträger (201, 202) mit Energie versorgbar sind und aufgrund der räumlichen Anordnung über die NFC-Schnittstelle des zweiten Datenträgers (201) eine drahtlose, direkte Kommunikationsverbindung (212) zu der kontaktlosen Schnittstelle des ersten Datenträgers (201) herstellbar ist, um die unmittelbare Anwesenheit des zweiten Datenträgers (202) durch den ersten Datenträger (201) überprüfen zu können.

6. System nach Anspruch 5, **dadurch gekennzeichnet, dass** die Schnittstellen des Lesegeräts (210) räumlich derart zueinander angeordnet sind, dass die Hauptflächen der Datenträger (201, 202) parallel zueinander in geringem Abstand angeordnet sind.

7. System nach Anspruch 5 oder 6, **dadurch gekennzeichnet, dass** der zweite Datenträger (202) auf dem Standard ISO/IEC 18092 basiert, wodurch der Datenträger RFID-Reader-Funktionalität aufweist.

8. System nach einem der Ansprüche 5 bis 7, **dadurch gekennzeichnet, dass** der erste und der zweite Datenträger (201, 202) dauerhaft durch das Lesegerät (210) mit Energie versorgt sind.

9. System nach einem der Ansprüche 5 bis 8, **dadurch gekennzeichnet, dass** durch den zweiten Datenträger (202) zumindest einmalig, insbesondere mehrfach, bevorzugt periodisch, oder dauerhaft ein RFID-Lesefeld (204) erzeugbar ist zur Herstellung der Kommunikationsverbindung (212) mit dem ersten Datenträger (201).

10. System nach einem der vorhergehenden Ansprüche, **dadurch gekennzeichnet, dass** dem ersten Datenträger (105a; 201) die Durchführung vorgegebener Kommandos und/ oder Aktionen und/ oder das Lesen und/ oder Beschreiben bestimmter Speicherbereiche nur dann ermöglicht ist, wenn die Anwesenheit des zweiten Datenträgers (105b; 202) durch den ersten Datenträger (105a; 201) positiv überprüft werden konnte.

11. System nach einem der vorhergehenden Ansprüche, **dadurch gekennzeichnet, dass** eine direkte Authentisierung zwischen dem ersten und den zweiten Datenträger (105a, 105b; 201, 202) unter Umgehung des Lesegeräts (101; 210) vorgesehen ist.

12. System nach Anspruch 11, **dadurch gekennzeichnet, dass** die Authentisierung widerrufbar ist, wenn die Anwesenheit des zweiten Datenträgers (105b; 202) durch den ersten Datenträger (105a; 201) nicht positiv überprüft werden konnte.

13. Verfahren zum Erkennen der Anwesenheit eines zweiten Datenträgers (105b) durch einen ersten Datenträger (105a) mittels des Systems gemäß einem der vorhergehenden Ansprüche mit den Verfahrensschritten:
- Versorgen des ersten und des zweiten Datenträgers (105a, 105b) mit Energie durch das Lesegeräts (101);
- Aufbau einer Kommunikationsverbindung zwischen dem ersten Datenträger (105a) und dem Lesegerät (101);
- Aufbau einer Kommunikationsverbindung zwischen dem zweiten Datenträger (105b) und dem Lesegerät (101);
- Aufbau eines zusätzlichen drahtlosen Kommunikationskanals unabhängig vom Lesegerät zwischen dem ersten und dem zweiten Datenträger (105a, 105b) über ein jeweils weiteres Kommunikationsmittel (104) zum Erkennen der Anwesenheit des zweiten Datenträgers (105b) durch den ersten Datenträger (105a).

## Claims

1. A system for the presence recognition of a second portable data carrier (105b) by a first portable data carrier (105a), which respectively comprise a contactless interface with an antenna and an electronic circuit (103) for storing and/or processing data, the system further comprising an RFID reading device (101), around the antenna (115) of which there is formed, in operation, a field (102) within which the reading device (101) supplies present contactless data carriers (105a, 105b) via their respective antennas with energy and/or via which a communication connection can be set up, wherein in the first and the second data carrier (105a, 105b) there is respectively provided a further communication means (104),
wherein via the additional communication means (104) an additional, direct communication channel (112), independent of the field (102) of the reading device (101), can be made available between the first and the second data carrier (105a, 105b), in order to be able to check the immediate presence of the second data carrier (105b) in the field (102) of the reading device (101) by the first data carrier (105a),
**characterized in that** the further communication means (104) of the first and second data carrier is configured for sending and receiving electromagnetic signals on a frequency which is different from the frequency of the reading device (101), or
that the further communication means (104) of the first and second data carrier comprises an optical transceiver which is configured in particular to send and receive in the infrared range.

2. The system according to claim 1, **characterized in that** the reading device (101) is based on the ISO/IEC 14443 standard and preferably works in a frequency range of 13.56 MHz.

3. The system according to claim 1 or 2, **characterized in that** the first data carrier (105a) has a communication relation to the reading device (101) and the second data carrier (105b) obtains at least energy (111) from the field (102) of the reading device (101).

4. The system according to any of the preceding claims, **characterized in that** a multiple, in particular periodic, communication between the first data carrier (105a) and the second data carrier (105b) is provided.

5. A system for the presence recognition of a second portable data carrier (202) by a first portable data carrier (201), which respectively comprise a contact-type interface and an electronic circuit for storing and/or processing data, and the first data carrier (201) additionally has a contactless interface, operable parallel to the contact-type interface, and the second data carrier (202) additionally has an NFC interface, the system further comprising a reading device (210) with two contact-type interfaces, via which the data carriers (201, 202) can be supplied with energy and on account of the spatial arrangement via the NFC interface of the second data carrier (201) a wireless, direct communication connection (212) to the contactless interface of the first data carrier (201) is establishable, in order to be able to check the immediate presence of the second data carrier (202) by the first data carrier (201).

6. The system according to claim 5, **characterized in that** the interfaces of the reading device (210) are spatially arranged to each other such that the main areas of the data carriers (201, 202) are arranged mutually parallel at a small distance.

7. The system according to claim 5 or 6, **characterized in that** the second data carrier (202) is based on the ISO/IEC 18092 standard, as a result of which the data carrier has RFID reader functionality.

8. The method according to any of claims 5 to 7, **characterized in that** the first and the second data carrier (201, 202) are permanently supplied with energy by the reading device (210).

9. The system according to any of claims 5 to 8, **characterized in that** by the second data carrier (202) there is generatable at least once, in particular multiply, preferably periodically, or permanently an RFID read field (204) for establishing the communication connection (212) with the first data carrier (201).

10. The system according to any of the preceding claims, **characterized in that** the first data carrier (105a; 201) is permitted to carry out specified commands and/or actions and/or to read and/or to write on certain memory regions only when the presence of the second data carrier (105b; 202) could have been positively checked by the first data carrier (105a; 201).

11. The system according to any of the preceding claims, **characterized in that** a direct authentication between the first and the second data carrier (105a, 105b; 201, 202), while circumventing the reading device (101; 210), is provided.

12. The system according to claim 11, **characterized in that** the authentication is revocable, when the presence of the second data carrier (105b, 202) could not have been positively checked by the first data carrier (105a; 201).

13. A method for recognizing the presence of a second data carrier (105b) by a first data carrier (105a) by means of the system according to any of the preceding claims, having the method steps:
- supplying the first and the second data carrier (105a, 105b) with energy by the reading device (101);
- setting up a communication connection between the first data carrier (105a) and the reading device (101);
- setting up a communication connection between the second data carrier (105b) and the reading device (101);
- setting up an additional wireless communication channel independent of the reading device between the first and the second data carrier (105a, 105b) via a respective further communication means (104) for recognizing the presence of the second data carrier (105b) by the first data carrier (105a).

## Revendications

1. Système destiné à la détection de la présence d'un deuxième support de données portable (105b) par un premier support de données portable (105a) qui comprennent respectivement une interface sans contact ayant une antenne et un circuit électronique (103) pour mémoriser et/ou traiter des données, le système comprenant en outre un appareil de lecture RFID (101) dont l'antenne (115) est, lors du fonctionnement, entourée d'un champ (102) à l'intérieur duquel l'appareil de lecture (101) alimente en énergie, par l'intermédiaire de leurs antennes respectives, des supports de données (105a, 105b) sans contact présents, et/ou par l'intermédiaire duquel une liaison de communication peut être établie, il étant prévu dans le premier et dans le deuxième support de données (105a, 105b) respectivement un autre moyen de communication (104),
par l'intermédiaire des autres moyens de communication (104), un canal supplémentaire de communication (112) indépendant du champ (102) de l'appareil de lecture (101) et direct pouvant être mis à disposition entre le premier et le deuxième support de données (105a, 105b) afin de pouvoir vérifier par le premier support de données (105a) la présence immédiate du deuxième support de données (105b) dans le champ (102) de l'appareil de lecture (101),
**caractérisé en ce que** l'autre moyen de communication (104) du premier et deuxième support de données est conçu pour émettre et capter des signaux électromagnétiques à une fréquence qui est différente de la fréquence de l'appareil de lecture (101), ou
**en ce que** l'autre moyen de communication (104) du premier et deuxième support de données comprend un émetteur-récepteur optique qui est en particulier conçu pour émettre et capter dans la plage des infrarouges.

2. Système selon la revendication 1, **caractérisé en ce que** l'appareil de lecture (101) est basé sur le standard ISO / IEC 14443 et travaille de préférence dans une plage de fréquences de 13,56 MHz.

3. Système selon la revendication 1 ou 2, **caractérisé en ce que** le premier support de données (5a) est en relation de communication avec l'appareil de lecture (101) et **en ce que** le deuxième support de données (105b) prélève au moins de l'énergie (111) à partir du champ (102) de l'appareil de lecture (101).

4. Système selon une des revendications précédentes, **caractérisé en ce qu'**une communication multiple, en particulier périodique, entre le premier support de données (105a) et le deuxième support de données (105b) est prévue.

5. Système de détection de la présence d'un deuxième support de données portable (202) par un premier support de données portable (201) qui comprennent respectivement une interface avec contact et un circuit électronique pour mémoriser et/ou traiter des données, le premier support de données (201) comportant additionnellement une interface sans contact exploitable parallèlement à l'interface avec contact et le deuxième support de données (202) comportant additionnellement une interface NFC, le système comprenant en outre un appareil de lecture (210) ayant deux interfaces avec contact par l'intermédiaire desquelles les supports de données (201, 202) peuvent être alimentés en énergie, et, en raison de l'agencement spatial, une liaison de communication (212) sans fil directe avec l'interface sans contact du premier support de données (201) pouvant être établie par l'intermédiaire de l'interface NFC du deuxième support de données (201) afin de pouvoir vérifier par le premier support de données (201) la présence immédiate du deuxième support de données (202).

6. Système selon la revendication 5, **caractérisé en ce que** les interfaces de l'appareil de lecture (210) sont agencées spatialement de telle manière l'une par rapport à l'autre que les surfaces principales des supports de données (201, 202) sont agencées parallèlement l'une à l'autre et avec peu d'écart.

7. Système selon la revendication 5 ou 6, **caractérisé en ce que** le deuxième support de données (202) est basé sur le standard ISO / IEC 18092, ce par quoi le support de données comporte une fonctionnalité de lecteur RFID.

8. Système selon une des revendications de 5 à 7, **caractérisé en ce que** le premier et le deuxième support de données (201, 202) sont durablement alimentés en énergie par l'appareil de lecture (210).

9. Système selon une des revendications de 5 à 8, **caractérisé en ce que**, par le deuxième support de données (202), un champ RFID (204) peut être généré au moins une seule fois, en particulier plusieurs fois, de préférence périodiquement, ou durablement, pour la mise en place de la liaison de communication (212) avec le premier support de données (201).

10. Système selon une des revendications précédentes, **caractérisé en ce qu'**il n'est rendu possible au premier support de données (105a; 201) d'exécuter des commandes et/ou actions données et/ou de lire et/ou de mettre en écriture certaines zones de mémoire que quand la présence du deuxième support de données (105b; 202) a pu être vérifiée positivement par le premier support de données (105a; 201).

11. Système selon une des revendications précédentes, **caractérisé en ce qu'**une authentification directe entre le premier et le deuxième support de données (105a, 105b; 201, 202) est prévue en contournant l'appareil de lecture (101; 210).

12. Système selon la revendication 11, **caractérisé en ce que** l'authentification est révocable quand la présence du deuxième support de données (105b; 202) n'a pas pu être vérifiée positivement par le premier support de données (105a; 201).

13. Procédé destiné à détecter la présence d'un deuxième support de données (105b) par un premier support de données (105a) au moyen du système selon une des revendications précédentes, comprenant les étapes de procédé:
- alimentation du premier et du deuxième support de données (105a, 105b) en énergie par l'appareil de lecture (101);
- établissement d'une liaison de communication entre le premier support de données (105a) et l'appareil de lecture (101);
- établissement d'une liaison de communication entre le deuxième support de données (105b) et l'appareil de lecture (101);
- établissement d'un canal de communication supplémentaire sans fil indépendamment de l'appareil de lecture entre le premier et le deuxième support de données (105a, 105b) par l'intermédiaire de respectivement un autre moyen de communication (104) pour la détection de la présence du deuxième support de données (105b) par le premier support de données (105a).
